# EUROPEAN PATENT SPECIFICATION

(11) **EP 2 391 759 B1**
(45) Date of publication and mention of the grant of the patent: **28.09.2016**
(21) Application number: 09837658.5
(22) Date of filing: 09.12.2009
(51) Int. Cl.: D06F 37/26, D06F 37/12, D06F 37/24

(54) **LAUNDRY MACHINE**
WASCHMASCHINE
MACHINE À LAVER

(30) Priority: 06.01.2009 KR 20090000599
(43) Date of publication of application: 07.12.2011
(60) Divisional application: 11007730.2
(73) Proprietor: LG Electronics Inc., Yeongdeungpo-gu Seoul, 07336 (KR)
(72) Inventor: KIM, Young Suk, Seoul 153-802 (KR); CHANG, Jae Won, Seoul 153-802 (KR); SEO, Hyun Seok, Seoul 153-802 (KR)
(74) Representative: Ter Meer Steinmeister & Partner
(86) International application number: PCT/KR2009/007353
(87) International publication number: WO 2010/079897

(56) References cited:
- EP-A2- 1 882 768
- WO-A1-2007/115894
- JP-A- 53 074 677
- US-A1- 2002 042 957

## Description

### Technical Field

The present invention relates to a laundry machine.

### Background Art

In general, a laundry machine includes a drum that is oriented-rotatable therein. Once wash water and detergent are mixedly loaded into the laundry machine, the drum rotates and washing operation is performed.

US 2002/0042957 A1 relates to a drawer-type washing machine having a housing opened at its front to form a cavity. A cabinet, opened at its top, is received in the cavity of the housing such that the cabinet is movable forward or backward relative to the housing. A washing tub unit is set with the cabinet. The washing tub unit contains washing water therein and carries out both a washing operation and a spin-drying operation for laundry contained therein. A suspension unit is provided which supports the washing tub unit within the cabinet while performing a damping function of attenuating operational vibrations of the washing tub unit.

EP 1 882 768 A2 discloses a twin-tub washing machine having a first washing tub having a relatively small capacity and a second washing tub having a relatively large capacity.

WO 2007/115894 A1 relates to a tub for a clothes washing-machine and in particular to the domestic type which houses a rotating drum within which the washing load is placed. The washing tub consisting of a peripheral cylindrical housing formed by a tub front section and a tub rear section, which are joined at their respective plastic material edges.

### Disclosure of Invention

### Technical Problem

There would be some disadvantages in enlarging the capacity of the laundry machine to receive more laundry.

### Solution to Problem

To achieve these objects and other advantages and in accordance with the purpose of the invention, as embodied and broadly described herein, a laundry machine includes a cabinet; a first tub having at least predetermined portion directly connected to the cabinet; a second tub provided underneath the first tub, relative movable with respect to the first tub, the second tub receiving wash water together with the first tub; and a drum rotatable about a vertical shaft within the first and second tubs.

In another aspect of the present invention, a laundry machine includes a cabinet; a first tub provided in the cabinet; and a second tub connected to the first tub via a vibration transmission preventing member, the second tub comprising a vibration emitting source.

It is to be understood that both the foregoing general description and the following detailed description of the present invention are exemplary and explanatory and are intended to provide further explanation of the invention as claimed.

### Advantageous Effects of Invention

According to the present invention, at least some portion of the tub provided in the laundry machine is directly connected to the cabinet. As a result, the capacities of the drum and tub may be enlarged without enlarging the exterior appearance of the cabinet.

### Brief Description of Drawings

The accompanying drawings, which are included to provide a further understanding of the disclosure and are incorporated in and constitute a part of this application, illustrate embodiment(s) of the disclosure and together with the description serve to explain the principle of the disclosure.

In the drawings:
FIG. 1 is a side sectional view illustrating an inner configuration of a laundry machine according to a first embodiment of the present invention;
FIG. 2 is a side sectional view illustrating an inner configuration of a laundry machine according to a second embodiment of the present invention;
FIG. 3 is a side sectional view illustrating an inner configuration of a laundry machine according to a third embodiment of the present invention;
FIG. 4 is a side sectional view illustrating a side sectional view illustrating an inner configuration of a laundry machine according to a fourth embodiment of the present invention;
FIG. 5 is a side sectional view illustrating a damping member according to an embodiment of the present invention provided in the laundry machine of the above embodiments;
FIG. 6 is a plane view of FIG. 5;
FIG. 7 is a sectional view illustrating a damping member according to another embodiment of the present invention;
FIG. 8 is a side sectional view illustrating a damping member according to a further embodiment of the present invention;
FIG. 9 is a plane view of FIG. 8; and
FIG. 10 is a side sectional view illustrating a damping member according to a still further embodiment of the present invention.

### Best Mode for Carrying out the Invention

Reference will now be made in detail to the specific embodiments of the present invention, examples of which are illustrated in the accompanying drawings. Wherever possible, the same reference numbers will be used throughout the drawings to refer to the same or like parts.

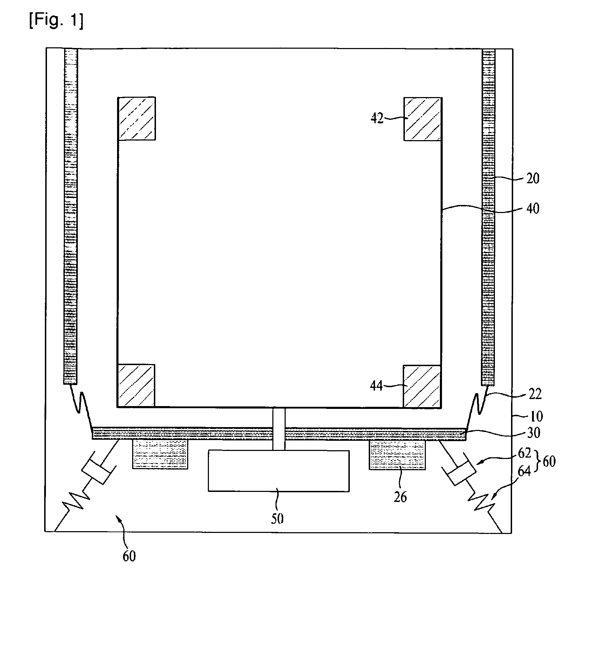

FIG. 1 is a side sectional view illustrating an inner configuration of a laundry machine according to a first embodiment of the present invention.

In reference to FIG. 1, a laundry machine includes a cabinet 10, a first tub 20 and a second tub 30. The first and second tubs 20 and 30 are provided in the cabinet 10.

The cabinet 10 defines an exterior appearance of the laundry machine. Here, the cabinet 10 may be integrally formed of a single member or it may be configured of a plurality of members such as a front, side and rear surface. Together with the first and second tub 20 and 30, a drum 40 which will be described later is provided in the cabinet 10.

According to the conventional laundry machine, in case the tub is provided in the cabinet, vibration generated from a motor is transmitted to the tub and thus predetermined space has to be provided between the tub and the cabinet. Because of the space, the vibration of the tub would not be transmitted to the cabinet. As a result, the conventional laundry machine has a disadvantage that the capacity of the cabinet should be increased to increase the cabinet of the tub inconveniently. However, if the capacity of the cabinet is increased, various components provided in the cabinet have to be arranged and the laundry machine has to be designed again inconveniently.

To solve the disadvantage, a laundry machine including a tub and drum with enlarged capacities, respectively, without the increase of the capacity of the cabinet will be described as follows.

In reference to FIG. 1, the tub of the laundry machine includes the first tub 20 and the second tub 30. Here, a vibration emitting source is provided in the second tub 30.

The tub according to this embodiment is configured of the first and second tubs 20 and 30, not integrally formed of a single member. The first and second tubs 20 and 30 will be described in detail later. The above vibration emitting source is referenced to as a configuration generating vibration and it may be corresponding to a motor 50 rotating the drum 40 according to this embodiment.

Once the drum 40 is rotated by the motor 50, vibration may be transmitted to the first tub 20 via the second tub 30. Then, if at least some part of the first tub 20 is directly connected to the second tub 30, the vibration generated from the motor 50 may be transmitted to the cabinet via the first tub 20 as it is.

Because of that, according to this embodiment, the second tub 30 is connected to the first tub 20 via a vibration transmission preventing member 22 able to absorb the vibration. The vibration transmission preventing member 22 may be configured of any material able to absorb vibration. For example, the vibration transmission preventing member 22 may be formed of elastic material such that the second tub 30 may be relation-movable with respect to the first tub 20.

The vibration transmission preventing member 22 may be formed of material able to prevent water leakage. Wash water supplied to the tub should not leak between the first and second tubs 20 and 30.

The drum 40 is oriented-rotatable about a vertical shaft within the first and second tubs 20 and 30. Specifically, the drum 40 is rotatable within the second tub 30. That is, the drum is connected to the motor 50 such that it is rotated by the motor 50.

More specifically, the drum 40 has a cylindrical shape with an open top. During the rotation, at least one balance weight 42 and 44 may be provided in upper and lower portions of an inner surface of the drum 40. Such the balance weight 42 and 44 would be provided in an outer surface of the drum 40. In this case, space corresponding to the thickness of the balance weight should be further provided outside the drum 40. Because of that, it is preferable in consideration of the enlarged capacity of the drum 40 that the balance weight is provided in an inner surface of the drum 40.

In the meanwhile, at least one auxiliary balance weight 26 may be provided underneath the second tub 30. If the auxiliary balance weight 26 is provided underneath the second tub 30, the balance weight 30 secured the second tub 30 only to reduce the vibration generated by the motor 50, such that the vibration transmitted to the first tub 20 from the second tub 30 may be reduced substantially.

As the second tub 30 is connected to the first tub 20 via the vibration transmission preventing member 22 according to this embodiment, the vibration of the second tub 30 generated by the motor 50 may be prevented from being transmitted to the first tub 20 efficiently. In addition, the transmission toward the first tub 20 is prevented and thus it is possible to dispose the first tub 20 closer to the cabinet 10 than the tub provided in the conventional laundry machine.

By extension, at least some part of the first tub 20 may be directly connected to the cabinet 10. That is, at least predetermined portion of the first tub 20 is directly connected to an inner surface of the cabinet 10 very closely.

If the at least part of the first tub 20 is directly connected to an inner surface of the cabinet 10, the space between the tub and the cabinet may be reduced remarkably in comparison with the conventional laundry machine. As a result, even when the identical or similar sized cabinet in comparison with the conventional cabinet is used, the capacity of the tub and drum inside the cabinet can be enlarged.

The above configuration that the at least predetermined part of the first tub is directly connected to the cabinet will be described in detail as follows.

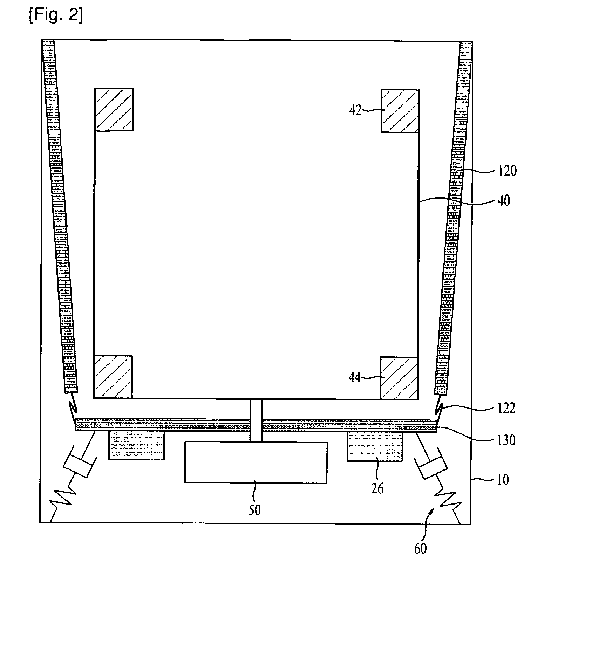

FIG. 2 is a side sectional view illustrating a configuration of a laundry machine according to a second embodiment of the present invention. in reference to FIG. 2, a first tub 120 provided in a laundry machine according to a second embodiment has at least predetermined part directly connected to the inner surface of the cabinet 10 and the other part spaced apart a predetermined distance from the inner surface of the cabinet 10.

As shown in FIG. 2, a predetermined portion of the first tub 120 is directly connected to the inner surface of the cabinet 10, oblique toward the other portion to a predetermined angle.

Specifically, a side upper portion of the first tub 120 is directly connected to the inner surface of the cabinet, being oblique toward a side lower portion to a predetermined angle from the inner surface of the cabinet 10. Alternatively, although not shown in the drawings, a side upper portion of the first tub 120 is directly connected to the inner surface of the cabinet 10 and a side lower portion of the first tub 120 is simply spaced apart from the inner surface of the cabinet.

The second tub 130 may be provided under the bottom of the first tub spaced apart a predetermined distance from the cabinet 10. Similar to the above embodiment, the first tub 120 is connected to the second tub 130 via a vibration transmission preventing member 122.

According to the laundry machine according to the second embodiment, the lower portion of the first tub 120 is spaced apart from the inner surface of the cabinet 10. In comparison to the conventional laundry machine, the space occupied by the drum 40 may be enlarged remarkably.

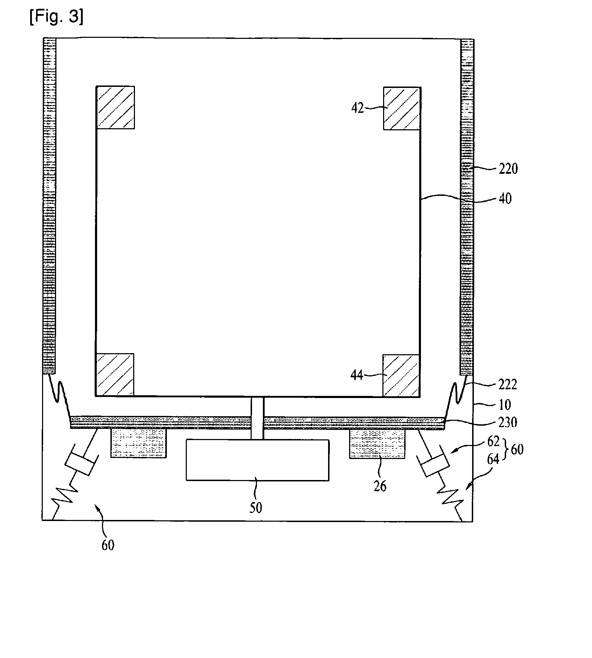

FIG. 3 is a side sectional view illustrating a configuration of a laundry machine according to a third embodiment of the present invention. According to this embodiment, an overall outer portion of a first tub 220 is directly connected to other cabinet 10, which is different from the above embodiments.

In reference to FIG. 3, an overall outer surface of the first tub 220 is directly connected to the inner surface of the cabinet 10 such that space utility for the cabinet may be maximized. That is, it is possible to enlarge the capacity of the drum 40 as much as possible. Even in this case, a second tub 230 is connected to the first tub 220 via a vibration transmission preventing member 222.

In the configuration of each laundry machine according to the above embodiments, the second tub is connected to the first tub via the vibration transmission preventing member 22, 122 and 222. When wash water is supplied to the first and second tubs, the vibration transmission preventing member 22, 122 and 222 is submerged in the wash water. Then, the vibration transmission preventing member 22, 122 and 222 may be directly pressured by the load of the wash water. If the wash water applies the pressure directly to the vibration transmission preventing member 22, 122 and 222, there would be deformity of the vibration transmission preventing member 22, 122 and 222 or as worse damage or breakage therein which might cause water leakage. A configuration for solving such a problem will be described as follows.

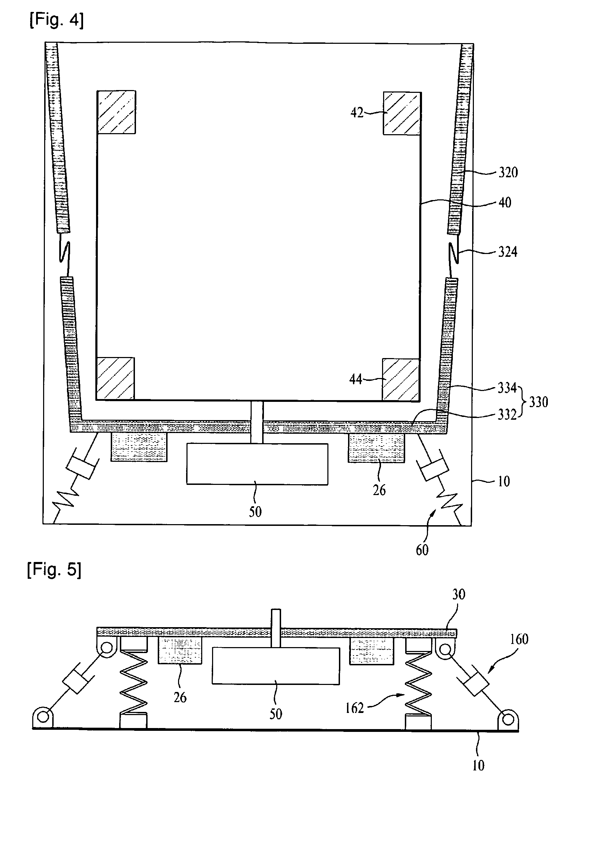

FIG. 4 is a side sectional view illustrating a configuration of a laundry machine according to a fourth embodiment of the present invention. In comparison to the above embodiments, there is a different feature in this embodiment and the different feature will be described as follows.

In reference to FIG. 4, a second tub 330 includes a supporting part 332 supporting the drum 40 and an extending part 334 extending toward a first tub 320 from an end of the supporting part 332 to be eventually connected to the first tub 320. The different feature of this embodiment is that the second tub 330 includes the extending part 334 extending toward the first tub 320, in comparison to the above embodiments.

The extending part 334 extends toward a lower end of the first tub 320 from the second tub 330. Here, a vibration transmission preventing member 324 may be provided between an end of the extending part 334 and the lower end of the first tub 320.

Here, it is preferable that the height of the extending part 334 is set higher than a maximum water level of the wash water received in the second tub 330. This is because the vibration transmission preventing member 324 connecting the extending part 334 to the first tub 320 should not be submerged in the wash water. as a result, water pressure may not applied to the vibration transmission preventing member 324 by the wash water as mentioned above and there may be no deformity or damage of the vibration transmission preventing member 324 caused by the water pressure.

As follows, a configuration for supporting the second tub provided in the laundry machine according to the above embodiments will be described.

FIGS. 1 to 4 present a pair of damping members 60 including a first damping member 62 configured of a damper and a second damping member configured of a spring connected with the first damping member 62 continuously.

Since inner space of the cabinet 10 is not so large, the damping member 60 may be oblique to a predetermined angle. As a result, space utilization inside the cabinet 10 may be enhanced. Hence, various embodiments of the above damping member will be described.

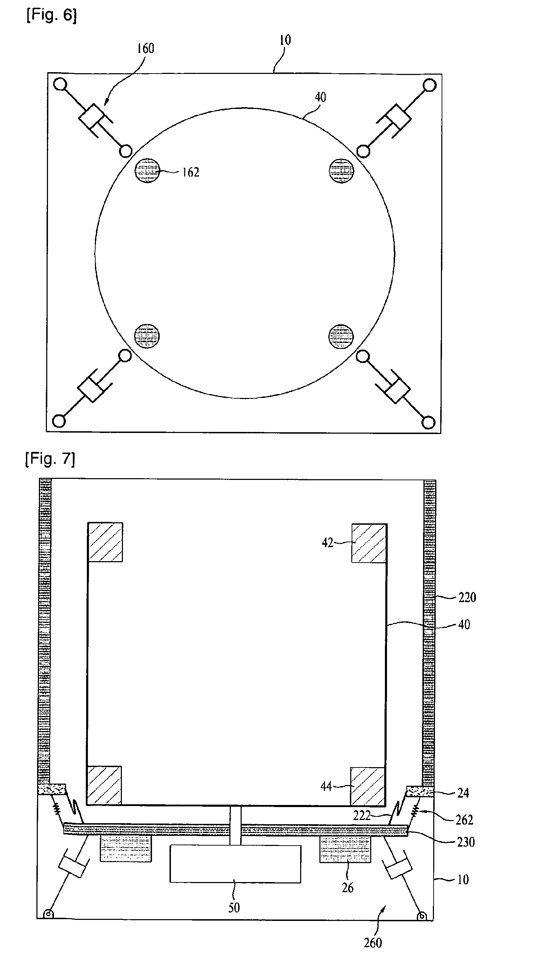

FIG. 5 is a side sectional view illustrating a damping member according to an embodiment and FIG. 6 is a plane view of FIG. 5. FIG. 6 illustrates only the drum 40 and a damping member 160 for convenience sake.

In reference to FIGS. 5 and 6, a damping member includes a first damping member 160 and a second damping member 162 which support the second tub 30. Here, the first and second damping members 160 and 162 are provided between the tub 30 and a base of the cabinet 10.

Specifically, the first damping member 160 may be configured of a damper, oblique to a predetermined angle as shown in the drawings. The reason why the first damping member is oblique is that the space inside the cabinet 10 is substantially not so large and that there is necessity of improving the space utilization inside the cabinet 10. The second damping member 162 may be configured of a spring provided between the second tub 30 and the base of the cabinet 10.

FIG. 7 is a side sectional view partially illustrating a damping member according to another embodiment.

In reference to FIG. 7, a first damping member 260 is provided a second tub 230 and a base of the cabinet 10 and a second damping member 262 is provided between the second tub 230 and a side wall of the cabinet 10. Compared with the embodiment of FIG. 5, there is a different feature of the second damping member 262. As follows, the different feature will be described.

As shown in FIG. 7, the second damping member 262 may be connected between the second tub 230 and the inner side wall of the cabinet 10.

Specifically, a supporting member 24 connected to the inner surface of the cabinet 10 is provided in a lower end portion of the first tub 220 and the second damping member 262 is provided between the supporting member 24 and the second tub 230. Here, the supporting member 24 may be formed separate from the cabinet 10 or integrally with the cabinet. The vibration transmission preventing member 222 may be provided between the supporting member 24 and the second tub 230.

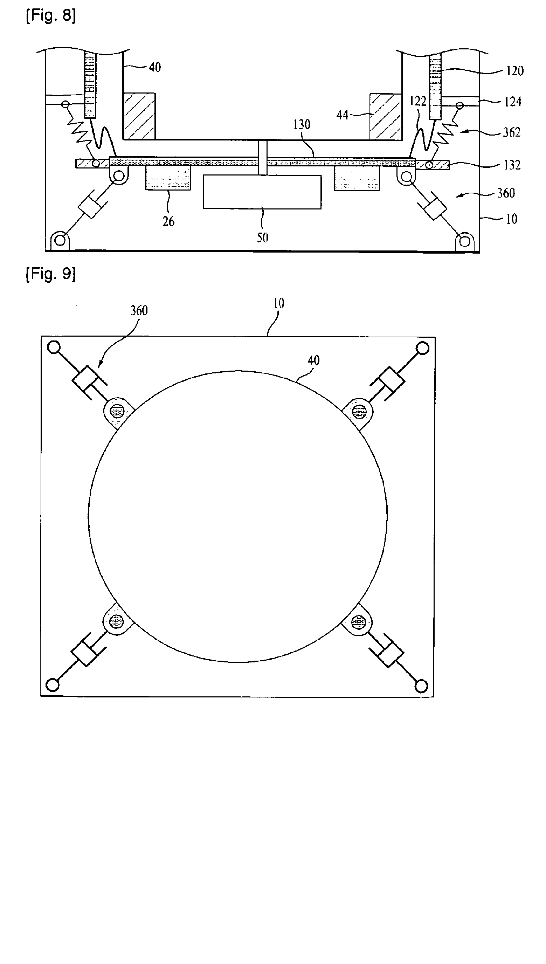

FIG. 8 is a side sectional view partially illustrating a damping member according to a further embodiment of the present invention and FIG. 9 is a plane view of FIG. 8.

In reference to FIGS. 8 and 9, the lower end of the first tub provided in the laundry machine according to the second embodiment is spaced apart a predetermined distance from the inner surface of the cabinet 10.

In this case, a first damping member 360 is provided between the second tub 130 and a base of the cabinet 10 and a second damping member 362 is provided between the second tub 130 and the inner side wall of the cabinet 10. The supporting member 124 composing the damping member is provided in space formed between the inner surface of the cabinet 10 and the lower end of the first tub 120.

That is, the lower end of the first tub 120 is spaced apart from the inner surface of the cabinet 10. As a result, the supporting member 124 could be provided in the space formed between the lower end of the first tub 120 and the inner surface of the cabinet 10. If then, the second damping member 362 connects the supporting member 124 with the second tub 130. Here, the supporting member may be integrally formed with the at least one of the cabinet 10 and first tub 120 or separable from the cabinet and first tub.

An end of the second damping member 362 may be directly connected to the second tub 130 or to a fixing part 132 extending from an end of the second tub 130. Such a fixing part 132 may be integrally formed with the second tub 130. The second tub 130 is connected to the first tub 120 via the vibration transmission preventing member 122 like above embodiments.

In the meanwhile, the configuration of the damping member according to this embodiment of FIG. 8 may be applicable to the laundry machine according to the first and fourth embodiments as well as to the first embodiment.

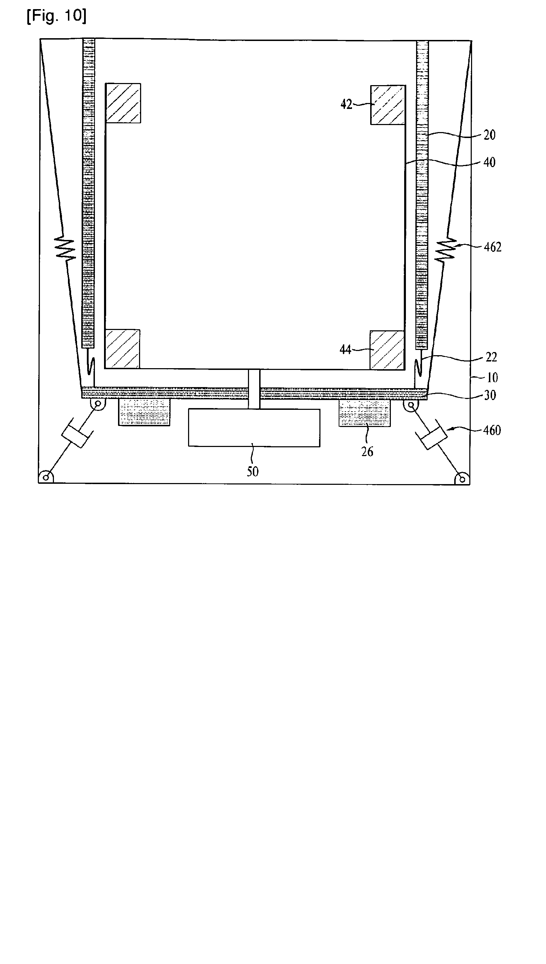

FIG. 10 is a side sectional view illustrating a damping member according to a still further embodiment.

In reference to FIG. 10, a second damping member 462 supporting the second tub 30 is connected to the upper portion of the cabinet 10 and this feature is different from the features of the above embodiments. As follows, this different feature will be described.

According to the laundry machine of this embodiment, the second damping member 462 composing the damping member supporting the second tub 30 may connect the second tub 30 with a upper portion of the inner surface of the cabinet 10. Since the second damping member 462 is directly connected to the upper inner end of the cabinet 10, that is, the top of the inner surface of the cabinet 10, an auxiliary supporting member is not required in this embodiment.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

### Industrial Applicability

At least some portion of the tub provided in the laundry machine is directly connected to the cabinet. As a result, the capacities of the drum and tub may be enlarged without enlarging the exterior appearance of the cabinet.

## Claims

1. A laundry machine comprising:
- a cabinet (10);
- a first tub part (20; 120; 220; 320) having at least predetermined portion directly connected to the cabinet (10);
- a second tub part (30; 130; 230; 330) provided underneath and connected to the first tub part (20; 120; 220; 320) in such a way that the second tub part is relatively movable with respect to the first tub part (20; 120; 220; 320), wherein the second tub part (30; 130; 230; 330) receiving wash water together with the first tab part (20; 120; 220; 320); and
- a drum (40) rotatable about a vertical shaft within the first and second tub parts,
wherein the first tub part (20; 120; 220; 320) is connected to the second tub part (30; 130; 230; 330) via a vibration transmission preventing member (22, 122, 222, 324).

2. The laundry machine of claim 1, wherein the vibration transmission preventing member (22, 122, 222, 324) is formed of elastic material.

3. The laundry machine of claim 1, wherein at least predetermined portion of the first tub part (20; 120; 220; 320) is integrally formed with the cabinet (10).

4. The laundry machine of claim 1, wherein an overall outer surface of the first tub part (220) is directly connected to the inner surface of the cabinet (10).

5. The laundry machine of claim 4, further comprising:
at least one damping member (60) supporting the second tub part (230), the at least one damping member (60) provided between the second tub part (230) and a base of the cabinet (10).

6. The laundry machine of claim 1, further comprising:
- a first damping member provided between the second tub part (30; 130; 230; 330) and a base of the cabinet (10); and
- a second damping member provided between the second tub part (30; 130; 230; 330) and an inner side wall of the cabinet (10), wherein the first and second damping members support the second tub part (30; 130; 230; 330).

7. The laundry machine of claim 1, wherein a side of the first tub part (20; 120; 220; 320) is directly connected to an inner surface of the cabinet (10) and the other opposite side of the first tub part (20; 120; 220; 320) is spaced apart a predetermined distance from an inner surface of the cabinet (10).

8. The laundry machine of claim 1, wherein a top of the first tub part (120; 320) is directly connected to the cabinet (10) and a bottom of the first tub part (120; 320) is spaced apart a predetermined distance from an inner surface of the cabinet (10).

9. The laundry machine of claim 8, wherein the second, tab part (130; 330) is located adjacent to the bottom of the first tub part (120; 320) spaced apart from the cabinet (10).

10. The laundry machine of claim 9, further comprising:
- at least one damping member (60) supporting the second tub part (130; 330), the at least one damping member (60) provided between the second tub part (130; 330) and a base of the cabinet (10).

11. The laundry machine of claim 9, further comprising:
- a first damping member provided between the second tub part (30; 130; 230; 330) and a base of the cabinet (10); and
- a second damping member provided between the second tub part (30; 130; 230; 330) and an inner side wall of the cabinet (10), wherein the first and second damping members support the second tub part (30; 130; 230; 330).

12. The laundry machine of claim 9, wherein the second tub part (30; 130; 230; 330) comprises:
- a supporting part supporting the drum (40); and
- an extending part extending toward the first tub part (20; 120; 220; 320) from an end of the supporting part to be connected to the first tub part (20; 120; 220; 320).

13. The laundry machine of claim 12, wherein the height of the extending part is preset substantially higher than a maximum level of wash water received in the first and second tub parts.

## Patentansprüche

1. Waschmaschine, die Folgendes umfasst:
- ein Gehäuse (10);
- ein erstes Bottichbauteil (20; 120; 220; 320), wovon wenigstens ein vorher festgelegter Abschnitt direkt mit dem Gehäuse (10) verbunden ist;
- ein zweites Bottichbauteil (30; 130; 230; 330), das so unter dem ersten Bottichbauteil (20; 120; 220; 320) vorgesehen ist und mit diesem verbunden ist, dass das zweite Bottichbauteil in Bezug auf das erste Bottichbauteil (20; 120; 220; 320) relativ beweglich ist, wobei das zweite Bottichbauteil (30; 130; 230; 330) zusammen mit dem ersten Bottichbauteil (20; 120; 220; 320) Waschwasser aufnimmt; und
- eine Trommel (40), die um eine vertikale Welle in dem ersten und zweiten Bottichbauteil drehbar ist, wobei das erste Bottichbauteil (20; 120; 220; 320) mit dem zweiten Bottichbauteil (30; 130; 230; 330) über ein Element (22, 122, 222, 324) verbunden ist, das eine Schwingungsübertragung verhindert.

2. Waschmaschine nach Anspruch 1, wobei das Element (22, 122, 222, 324), das eine Schwingungsübertragung verhindert, aus elastischem Material gebildet ist.

3. Waschmaschine nach Anspruch 1, wobei wenigstens ein vorher festgelegter Abschnitt des ersten Bottichbauteils (20; 120; 220; 320) mit dem Gehäuse (10) einteilig ausgebildet ist.

4. Waschmaschine nach Anspruch 1, wobei eine gesamte äußere Oberfläche des ersten Bottichbauteils (220) direkt mit der inneren Oberfläche des Gehäuses (10) verbunden ist.

5. Waschmaschine nach Anspruch 4, die ferner Folgendes umfasst:
wenigstens ein Dämpfungselement (60), das das zweite Bottichbauteil (230) hält, wobei das wenigstens eine Dämpfungselement (60) zwischen dem zweiten Bottichbauteil (230) und einer Basis des Gehäuses (10) vorgesehen ist.

6. Waschmaschine nach Anspruch 1, die ferner Folgendes umfasst:
- ein erstes Dämpfungselement, das zwischen dem zweiten Bottichbauteil (30; 130; 230; 330) und einer Basis des Gehäuses (10) vorgesehen ist; und
- ein zweites Dämpfungselement, das zwischen dem zweiten Bottichbauteil (30; 130; 230; 330) und einer inneren Seitenwand des Gehäuses (10) vorgesehen ist, wobei das erste und das zweite Dämpfungselement das zweite Bottichbauteil (30; 130; 230; 330) halten.

7. Waschmaschine nach Anspruch 1, wobei eine Seite des ersten Bottichbauteils (20; 120; 220; 320) direkt mit einer inneren Oberfläche des Gehäuses (10) verbunden ist und die andere gegenüberliegende Seite des ersten Bottichbauteils (20; 120; 220; 320) mit einem vorher festgelegten Abstand von einer inneren Oberfläche des Gehäuses (10) beabstandet ist.

8. Waschmaschine nach Anspruch 1, wobei eine Oberseite des ersten Bottichbauteils (120; 320) direkt mit dem Gehäuse (10) verbunden ist und ein Boden des ersten Bottichbauteils (120; 320) mit einem vorher festgelegten Abstand von einer inneren Oberfläche des Gehäuses (10) beabstandet ist.

9. Waschmaschine nach Anspruch 8, wobei sich das zweite Bottichbauteil (130; 330) angrenzend an den Boden des ersten Bottichbauteils (120; 320) beabstandet von dem Gehäuse (10) befindet.

10. Waschmaschine nach Anspruch 9, die ferner Folgendes umfasst:
- wenigstens ein Dämpfungselement (60), das das zweite Bottichbauteil (130; 330) hält, wobei das wenigstens eine Dämpfungselement (60) zwischen dem zweiten Bottichbauteil (130; 330) und einer Basis des Gehäuses (10) vorgesehen ist.

11. Waschmaschine nach Anspruch 9, die ferner Folgendes umfasst:
- ein erstes Dämpfungselement, das zwischen dem zweiten Bottichbauteil (30; 130; 230; 330) und einer Basis des Gehäuses (10) vorgesehen ist; und
- ein zweites Dämpfungselement, das zwischen dem zweiten Bottichbauteil (30; 130; 230; 330) und einer inneren Seitenwand des Gehäuses (10) vorgesehen ist, wobei das erste und das zweite Dämpfungselement das zweite Bottichbauteil (30; 130; 230; 330) halten.

12. Waschmaschine nach Anspruch 9, wobei das zweite Bottichbauteil (30; 130; 230; 330) Folgendes umfasst:
- ein Haltebauteil, das die Trommel (40) hält; und
- ein Verlängerungsbauteil, das sich in Richtung des ersten Bottichbauteils (20; 120; 220; 320) von einem Ende des Haltebauteils erstreckt, um mit dem ersten Bottichbauteil (20; 120; 220; 320) verbunden zu werden.

13. Waschmaschine nach Anspruch 12, wobei die Höhe des Verlängerungsbauteils im Voraus im Wesentlichen höher als ein maximaler Pegel von Waschwasser, das in dem ersten und zweiten Bottichbauteil aufgenommen ist, eingestellt ist.

## Revendications

1. Machine à laver comprenant :
- une carrosserie (10) ;
- une première partie de cuve (20 ; 120 ; 220 ; 320) ayant au moins une portion prédéterminée connectée directement à la carrosserie (10) ;
- une seconde partie de cuve (30 ; 130 ; 230 ; 330) prévue au-dessous de est connectée à la première partie de cuve (20 ; 120 ; 220 ; 320) d'une telle façon que la seconde partie de cuve est relativement mobile par rapport à la première partie de cuve (20 ; 120 ; 220 ; 320), dans lesquelles la seconde partie de cuve (30 ; 130 ; 230 ; 330) reçoit de l'eau de lavage ensemble avec la première partie de cuve (20 ; 120 ; 220 ; 320) ; et
- un tambour (40) capable de rotation autour d'un arbre vertical, à l'intérieur de la première et de la seconde partie de cuve, dans laquelle la première partie de cuve (20 ; 120 ; 220 ; 320) est connectée à la seconde partie de cuve (30 ; 130 ; 230 ; 330) via un élément d'empêchement de transmission de vibrations (22, 122, 222, 324).

2. Machine à laver selon la revendication 1, dans laquelle l'élément d'empêchement de transmission de vibrations (22 ; 122 ; 222 ; 324) est formé en matériau élastique.

3. Machine à laver selon la revendication 1, dans laquelle au moins une portion prédéterminée de la première partie de cuve (20 ; 120 ; 220 ; 320) est formée intégralement avec la carrosserie (10).

4. Machine à laver selon la revendication 1, dans laquelle une surface extérieure globale de la première partie de cuve (220) est connectée directement à la surface intérieure de la carrosserie (10).

5. Machine à laver selon la revendication 4, comprenant en outre :
au moins un élément d'amortissement (60) qui supporte la seconde partie de cuve (130), ledit au moins un élément d'amortissement (60) étant prévu entre la seconde partie de cuve (230) et une base de la carrosserie (10).

6. Machine à laver selon la revendication 1, comprenant en outre :
- un premier élément d'amortissement prévu entre la seconde partie de cuve (30 ; 130 ; 230 ; 330) et une base de la carrosserie (10) ; et
- un second élément d'amortissement prévu entre la seconde partie de cuve (30 ; 130 ; 230 ; 330) et une paroi latérale intérieure de la carrosserie (10), dans laquelle le premier et le second élément d'amortissement supportent la seconde partie de cuve (30 ; 130 ; 230 ; 330).

7. Machine à laver selon la revendication 1, dans laquelle un côté de la première partie de cuve (20 ; 120 ; 220 ; 320) est directement connecté à une surface intérieure de la carrosserie (10), et l'autre côté opposé de la première partie de cuve (20 ; 120 ; 220 ; 320) est espacé d'une distance prédéterminée depuis une surface intérieure de la carrosserie (10).

8. Machine à laver selon la revendication 1, dans laquelle un sommet de la première partie de cuve (120 ; 320) est connecté directement à la carrosserie (10) et un fond de la première partie de cuve (120 ; 320) est espacé d'une distance prédéterminée depuis une surface intérieure de la carrosserie (10).

9. Machine à laver selon la revendication 8, dans laquelle la seconde partie de cuve (130 ; 330) est située adjacente au fond de la première partie de cuve (120 ; 320) espacé de la carrosserie (10).

10. Machine à laver selon la revendication 9, comprenant en outre :
- au moins un élément d'amortissement (60) supportant la seconde partie de cuve (130 ; 330), ledit au moins un élément d'amortissement (60) étant prévu entre la seconde partie de cuve (130 ; 330) et une base de la carrosserie (10).

11. Machine à laver selon la revendication 9, comprenant en outre :
- un premier élément d'amortissement prévu entre la seconde partie de cuve (30 ; 130 ; 230 ; 330) et une base de la carrosserie (10) ; et
- un second élément d'amortissement prévu entre la seconde partie de cuve (30 ; 130 ; 230 ; 330) et une paroi latérale intérieure de la carrosserie (10), dans laquelle le premier et le second élément d'amortissement supportent la seconde partie de cuve (30 ; 130 ; 230 ; 330).

12. Machine à laver selon la revendication 9, dans laquelle la seconde partie de cuve (30 ; 130 ; 230 ; 330) comprend :
- une partie de support qui supporte le tambour (40) ; et
- une partie en extension, qui s'étend vers la première partie de cuve (20 ; 120 ; 220 ; 320) depuis une extrémité de la partie de support à connecter à la première partie de cuve (20 ; 120 ; 220 ; 320).

13. Machine à laver selon la revendication 12, dans laquelle la hauteur de la partie en extension est préalablement choisie sensiblement plus haute qu'un niveau maximum de l'eau de lavage reçue dans la première et dans la seconde partie de cuve.
